# EUROPÄISCHE PATENTSCHRIFT

(11) **EP 3 736 198 B1**
(45) Veröffentlichungstag und Bekanntmachung des Hinweises auf die Patenterteilung: **01.09.2021**
(21) Anmeldenummer: 20000157.6
(22) Anmeldetag: 17.04.2020
(51) Int. Cl.: B62J 6/16, B62K 23/06, B62M 25/04, B62M 25/08

(54) **FAHRRADBEDIENVORRICHTUNG**
BICYCLE OPERATING DEVICE
DISPOSITIF DE COMMANDE DE BICYCLETTE

(30) Priorität: 10.05.2019 DE 102019206835
(43) Veröffentlichungstag der Anmeldung: 11.11.2020
(73) Patentinhaber: SRAM Deutschland GmbH, 97424 Schweinfurt (DE)
(72) Erfinder: Linke, Alexander, 97453 Schonungen/OT Forst (DE)

(56) Entgegenhaltungen:
- EP-A2- 1 375 325
- DE-A1-102013 020 670

## Beschreibung

Die vorliegende Erfindung betrifft eine Fahrradbedienvorrichtung zur Ansteuerung, insbesondere zur drahtlosen Ansteuerung, wenigstens einer Komponente eines Fahrrads, umfassend: ein Trägerelement, ein Gehäuse und ein Bedienbauteil. An dem Trägerelement ist eine Befestigungseinrichtung, vorzugsweise eine Schelle, zur Fixierung der Fahrradbedienvorrichtung am Lenker eines Fahrrads anbringbar oder vorgesehen. Weiterhin ist an dem Trägerelement das Gehäuse vorgesehen, in dem eine elektronische Schaltungsanordnung aufgenommen ist, und an dem ein erster und ein zweiter jeweils mit der elektronischen Schaltungsanordnung verbundener Schalter vorgesehen sind. Das an dem Trägerelement um eine Bedienachse schwenkbar gelagerte und in eine Neutralstellung vorgespannte Bedienbauteil ist aus der Neutralstellung in einer ersten Drehrichtung um die Bedienachse auslenkbar, um den ersten Schalter zu betätigen, und es ist in einer der ersten Drehrichtung entgegengesetzten zweiten Drehrichtung aus der Neutralstellung auslenkbar, um den zweiten Schalter zu betätigen.

Eine derartige gattungsgemäße Fahrradbedienvorrichtung ist beispielsweise aus der Druckschrift EP 3147194 A1 bekannt und dort in den Figuren 24 bis 26 dargestellt, wobei das Bedienbauteil dieser bekannten Fahrradbedienvorrichtung ein einstückig ausgebildetes Kunststoffbauteil ist.

Dokument EP1375325A2 zeigt die Präambel des Anspruchs 1.

Vor diesem Hintergrund besteht die Aufgabe gemäß einem ersten Aspekt der vorliegenden Erfindung darin, die Gestaltungsfreiheit für das Bedienbauteil im Vergleich zu der gattungsgemäßen Fahrradbedienvorrichtung zu erhöhen.

Erfindungsgemäß wird hierzu vorgeschlagen, dass das Bedienbauteil ein erstes Bedienelement und ein zweites Bedienelement umfasst, die separat voneinander jeweils einteilig ausgebildet und jeweils um die Bedienachse schwenkbar an dem Trägerelement gelagert sind. Aufgrund der besseren Entformbarkeit der einzelnen Teile lässt sich hierdurch eine größere Gestaltungsfreiheit erzielen.

Grundsätzlich soll nicht ausgeschlossen sein, dass sich beispielsweise durch einen geeigneten Formschlusseingriff zwischen den Bedienelementen das Bedienbauteil nur als Einheit aus der Neutralstellung bewegen lässt.

Gemäß einer bevorzugten Weiterbildung kann jedoch vorgesehen sein, dass die beiden Bedienelemente derart ausgebildet und gelagert sind, dass sich, jeweils ausgehend von der Neutralstellung des Bedienbauteils, die folgende Kinematik ergibt:
- Durch eine direkte Auslenkung des ersten Bedienelements in der zweiten Drehrichtung wird das zweite Bedienelement in der zweiten Drehrichtung mitbewegt.
- Durch eine direkte Auslenkung des zweiten Bedienelements in der ersten Drehrichtung wird das erste Bedienelement in der ersten Drehrichtung mitbewegt.
- Bei einer direkten Auslenkung des ersten Bedienelements in der ersten Drehrichtung wird das zweite Bedienelement nicht in der ersten Drehrichtung mitbewegt.
- Bei einer direkten Auslenkung des zweiten Bedienelements in der zweiten Drehrichtung wird das erste Bedienelement nicht in der zweiten Drehrichtung mitbewegt.

Jedes der beiden Bedienelemente ist also bevorzugt in eine Drehrichtung separat direkt auslenkbar, während durch eine direkte Auslenkung des Bedienelements in der jeweils anderen Drehrichtung das gesamte Bedienbauteil als Einheit ausgelenkt wird.

Unter direkter Auslenkung eines Bedienelements wird dabei eine Auslenkung durch direkte Einwirkung der Bedienperson auf das jeweilige Bedienelement verstanden, im Gegensatz zu einer indirekten Auslenkung durch direkte Einwirkung auf das jeweils andere Bedienelement und Wechselwirkung der Bedienelemente miteinander.

Dies ermöglicht insbesondere die Erhöhung der Anzahl von Bedienoptionen, wenn nämlich die beiden Bedienelemente weiter derart ausgebildet und gelagert sind, dass ausgehend von der Neutralstellung des Bedienbauteils das erste Bedienelement in der ersten Drehrichtung (direkt) auslenkbar ist und gleichzeitig das zweite Bedienelement in der zweiten Drehrichtung (direkt) auslenkbar ist, um sowohl den ersten Schalter als auch den zweiten Schalter zu betätigen.

Die Schaltungsanordnung kann dabei so konfiguriert sein, dass sie bei Betätigung des ersten Schalters ohne Betätigung des zweiten Schalters ein erstes Signal erzeugt, bei Betätigung des zweiten Schalters ohne Betätigung des ersten Schalters ein zweites Signal erzeugt, und bei gleichzeitiger Betätigung des ersten und zweiten Schalters ein drittes Signal erzeugt. Auf diese Weise können mit zwei Bedienelementen drei Funktionen oder/und Komponenten des Fahrrads angesteuert werden. Durch Verwendung einer solchen Fahrradbedienvorrichtung auf beiden Seiten des Lenkers ist die Ansteuerung von sechs Funktionen bzw. Komponenten möglich. Es ist möglich, beispielsweise durch eine geeignete App, eine Zuordnung von den einzelnen Schaltern oder Schalterbetätigungen zu den gewünschten durch die Schalterbetätigungen anzusteuernden Funktionen bzw. Komponenten vorzunehmen.

Beispielsweise kann das erste Signal dazu verwendet werden, ein Hochschalten eines Schaltwerks um eine Gangstufe auszulösen, das zweite Signal kann dazu verwendet werden, ein Herunterschalten des Schaltwerks um eine Gangstufe auszulösen, und durch das dritte Signal kann zum Beispiel eine Verstellung der Sattelstütze angesteuert werden.

Ganz generell wird in der vorliegenden Anmeldung mit dem Begriff "Schalter" jede Art von Schaltelement bezeichnet, insbesondere Schalter im engeren Sinne, die einen Stromkreis öffnen und schließen, Taster, die einen Impuls auslösen, um einen Stromkreis oder Prozess zu aktivieren und Tastschalter, die durch Betätigen aktiviert und beim Loslassen deaktiviert werden. Bevorzugt sind die Schalter als Drucktaster oder Schnappschalter ausgebildet.

Konstruktiv lässt sich die vorbeschriebene Kopplung der beiden Bedienelemente auf einfache Weise dadurch realisieren, dass das erste Bedienelement und das zweite Bedienelement jeweils eine Kontaktfläche aufweisen. Dabei erstrecken sich die Kontaktflächen des ersten und des zweiten Bedienelements jeweils im Wesentlichen radial weg von der Bedienachse oder parallel zu dieser, und im montierten Zustand der Fahrradbedienvorrichtung sind die Kontaktflächen einander zugewandt.

Dass eine Fläche sich radial weg von einer Achse erstreckt, ist so zu verstehen, dass die Fläche sich in einer Ebene erstreckt, welche diese Achse enthält.

In einer Neutralstellung des Bedienbauteils können die Kontaktflächen des ersten und des zweiten Bedienelements direkt oder indirekt aneinander anliegen, um das vorbeschriebene Auslenkungsverhalten zu erzielen.

Um bei einer direkten Auslenkung des ersten Bedienelements in die erste Drehrichtung oder bei einer direkten Auslenkung des zweiten Bedienelements in die zweite Drehrichtung zu verhindern, dass sich das jeweils andere Bedienelement in unerwünschter Weise bewegt, etwa wackelt, kann vorgesehen sein, dass die Fahrradbedienvorrichtung eine Druckfeder aufweist, deren eines Ende sich an der Kontaktfläche des ersten Bedienelements abstützt, und deren anderes Ende sich an der Kontaktfläche des zweiten Bedienelements abstützt. In diesem Fall stehen die Kontaktflächen indirekt über die Druckfeder miteinander in Kontakt.

Zur platzsparenden und zweckmäßigen Ausgestaltung des Bedienbauteils kann vorgesehen sein, dass eines der Bedienelemente, beispielsweise das zweite Bedienelement, einen plattenartigen Flügelabschnitt umfasst, der sich im Wesentlichen radial von der Bedienachse weg oder parallel zu dieser erstreckt. Dabei ist auf einer ersten Seite des plattenartigen Flügelabschnitts die Kontaktfläche des zweiten Bedienelements ausgebildet, und auf einer der ersten Seite entgegengesetzten zweiten Seite des plattenartigen Flügelabschnitts ist eine Schalterbetätigungsfläche zur Betätigung des zweiten Schalters ausgebildet.

Gemäß einer bevorzugten Weiterbildung kann dabei vorgesehen sein, dass das andere, also beispielsweise das erste Bedienelement, einen ersten plattenartigen Flügelabschnitt und einen zweiten plattenartigen Flügelabschnitt umfasst, die sich jeweils im Wesentlichen radial von der Bedienachse weg oder parallel zu dieser erstrecken, wobei an einer Seite des ersten Flügelabschnitts die Kontaktfläche des ersten Bedienelements ausgebildet ist und auf einer dieser Kontaktfläche zugewandten Seite des zweiten Flügelabschnitts eine Schalterbetätigungsfläche zur Betätigung des ersten Schalters ausgebildet ist.

Die Kontaktfläche und die Schalterbetätigungsfläche des ersten Bedienelements können dabei bevorzugt unter einem Winkel von 80 bis 100 Grad, besonders bevorzugt unter einem Winkel von etwa 90 Grad, zueinander angeordnet sein.

Wenn in dieser Anmeldung Flächen oder Flächenabschnitte als parallel bzw. senkrecht bzw. unter einem gegebenen Winkel zueinander angeordnet bezeichnet werden, dann ist das so zu verstehen, dass die Flächen oder Flächenabschnitte jeweils plan oder zumindest näherungsweise plan sind, also in oder entlang einer zugeordneten Ebene verlaufen, und dass die den Flächen oder Flächenabschnitten zugeordneten Ebenen zueinander parallel sind bzw. zueinander senkrecht sind bzw. sich unter dem gegebenen Winkel schneiden.

Um den Bedienkomfort und die Bediensicherheit zu erhöhen, gehen gemäß einer bevorzugten Weiterbildung in der Neutralstellung des Bedienbauteils von außen sichtbare und aneinander angrenzende Oberflächen des ersten und des zweiten Bedienbauteils zumindest abschnittsweise stufenlos ineinander über. Hierdurch wird das Risiko eines Einklemmens oder Hängenbleibens eines Fingers der Bedienperson an und zwischen den Bedienelementen verringert, und die beiden Bedienelemente gemeinsam erzeugen auch optisch den Eindruck eines einheitlichen Bedienbauteils.

Gemäß einer bevorzugten Weiterbildung kann vorgesehen sein, dass das Bedienbauteil drei separate Daumen-Angriffsflächen umfasst, also eine erste, eine zweite und eine dritte Daumen-Angriffsfläche. Diese sind jeweils für die Betätigung durch einen Daumen einer Bedienperson zur Betätigung von einem der Schalter ausgelegt, so dass durch Betätigung der ersten Daumen-Angriffsfläche der erste Schalter betätigbar ist und durch Betätigung der zweiten Daumen-Angriffsfläche der zweite Schalter betätigbar ist. Weiterhin ist bevorzugt durch Betätigung der dritten Daumen-Angriffsfläche ebenfalls der zweite Schalter betätigbar.

Es wird gemäß einem zweiten Aspekt der Erfindung im Übrigen auch Schutz beantragt für eine gattungsgemäße Fahrradbedienvorrichtung, bei der das Bedienbauteil drei Daumen-Angriffsflächen umfasst, wie sie vorstehend beschrieben wurden.

Unabhängig davon, ob das Bedienbauteil ein- oder mehrteilig aufgebaut ist, können ergeben sich hierdurch vielfältige Bedienmöglichkeiten für den Daumen der Bedienperson.

Bevorzugt sind die erste und die zweite Daumen-Angriffsfläche unter einem Winkel von weniger als 30° zueinander angeordnet, so dass beide Schalter mit einer ähnlichen Daumenbewegung insbesondere in nahezu die gleiche Richtung (nach vorne) und unter ähnlichem Kraftaufwand auf ergonomische Weise betätigt werden.

Weiterhin können die erste und die zweite Daumen-Angriffsfläche bevorzugt sowohl längs der Bedienachse wie auch in einer Richtung senkrecht zur Bedienachse versetzt zueinander angeordnet sein, um die Position der Daumen-Angriffsfläche an die Bewegungsmöglichkeiten des Daumens einer Hand anzupassen, die mit den übrigen Fingern einen Lenkergriff hält.

Alternativ oder zusätzlich kann vorgesehen sein, dass wenigstens eine, vorzugsweise jede der ersten und der zweiten Daumen-Angriffsfläche wenigstens abschnittsweise auf einem radial oder/und axial vorstehenden, plattenartig ausgebildeten Bedienvorsprung ausgebildet ist. Die rückseitige Fläche wenigstens eines, vorzugsweise beider Betätigungsvorsprünge kann dabei als Angriffsfläche für einen der übrigen Finger der Hand der Bedienperson ausgebildet sein.

Bei einem mehrteilig aufgebauten Bedienbauteil mit einem ersten und einem zweiten Bedienelement ist bevorzugt die erste Daumen-Angriffsfläche am ersten Bedienelement ausgebildet, und die zweite Daumen-Angriffsfläche ist am zweiten Bedienelement ausgebildet.

Die dritte Daumen-Angriffsfläche kann so an die erste Daumen-Angriffsfläche angrenzen oder in diese übergehen, dass durch Betätigung der dritten Daumen-Angriffsfläche mit dem Daumen der Bedienperson der zweite Schalter betätigbar ist.

Dabei bilden die erste und die dritte Daumen-Angriffsfläche gemeinsam bevorzugt eine muldenartige Struktur für den Daumen der Bedienperson. Vorzugsweise ist diese muldenartige Struktur relativ flach ausgebildet, damit die dritte Daumen-Angriffsfläche einer Bewegung des Daumens von der ersten zur zweiten Daumen-Angriffsfläche nicht im Weg steht. Beispielsweise kann die erste Daumen-Angriffsfläche unter einem Winkel von mehr als 140 Grad, bevorzugt unter einem Winkel von etwa 150 Grad oder mehr an die dritte Daumen-Angriffsfläche angrenzen.

Nachfolgend wird die vorliegende Erfindung anhand einiger bevorzugter Ausführungsbeispiele näher erläutert, die in den beiliegenden Figuren dargestellt sind. Dabei zeigen:
- Fig. 1: eine Seitenansicht eines Fahrrads mit einer Fahrradbedienvorrichtungen gemäß einem ersten Ausführungsbeispiel der vorliegenden Erfindung,
- Fig. 2: eine vergrößerte perspektivische Darstellung des ersten Ausführungsbeispiels aus Fig. 1 ohne den Lenker, die Bremsbedieneinrichtung und die Befestigungseinrichtung,
- Fig. 3: eine Explosionsdarstellung des Gegenstands von Fig. 2,
- Fig. 4: in Teilabbildung a) eine Ansicht von schräg unten auf den Gegenstand von Figur 2 ohne Gehäuse, in Teilabbildung b) eine perspektivische Ansicht auf einen Teil des Gehäuses der Fahrradbedienvorrichtung aus Fig. 2 ohne den Deckel des Energiespeicherfachs und ohne das Energiespeicherelement, und in Teilabbildung c) eine perspektivische und vergrößerte Ansicht einer in der Fahrradbedienvorrichtung aus Fig. 2 eingesetzten Kontaktfeder,
- Fig. 5: in den Teilabbildungen a) bis f) jeweils unterschiedliche perspektivische Ansichten des ersten Bedienelements der Fahrradbedienvorrichtung aus Fig. 2,
- Fig. 6: in den Teilabbildungen a) bis f jeweils unterschiedliche perspektivische Ansichten des zweiten Bedienelements der Fahrradbedienvorrichtung aus Fig. 2,
- Fig. 7: in den Teilabbildungen a) bis f) jeweils unterschiedliche perspektivische Ansichten des Bedienbauteils der Fahrradbedienvorrichtung aus Figur 2,
- Fig. 8: in den Teilabbildungen a) bis c) verschiedene perspektivische Ansichten des Trägerelements der Fahrradbedienvorrichtung aus Fig. 2,
- Fig. 9: in den Teilabbildungen a) bis f) verschiedene perspektivische Ansichten des Gehäuses der Fahrradbedienvorrichtung aus Fig. 2,
- Fig. 10: in Teilabbildung a) eine perspektivische Ansicht einer Fahrradbedienvorrichtung gemäß einem zweiten Ausführungsbeispiel in Teilabbildung b) eine Explosionsdarstellung des Gegenstands von Teilabbildung 10a) sowie
- Fig. 11: in den Teilabbildungen a) bis f) verschiedene perspektivische Ansichten des Bedienbauteils des Ausführungsbeispiels aus Fig. 10.

Es wird darauf hingewiesen, dass es sich bei den Figuren um vereinfachte und schematisierte Darstellungen handelt, die im Wesentlichen das Prinzip der Erfindung veranschaulichen sollen. Um die Figuren nicht zu überfrachten sind nicht immer alle Merkmale in jeder Darstellung mit Bezugszeichen versehen, sondern in erster Linie nur diejenigen Merkmale, die zur Erläuterung der jeweiligen Figur benötigt werden.

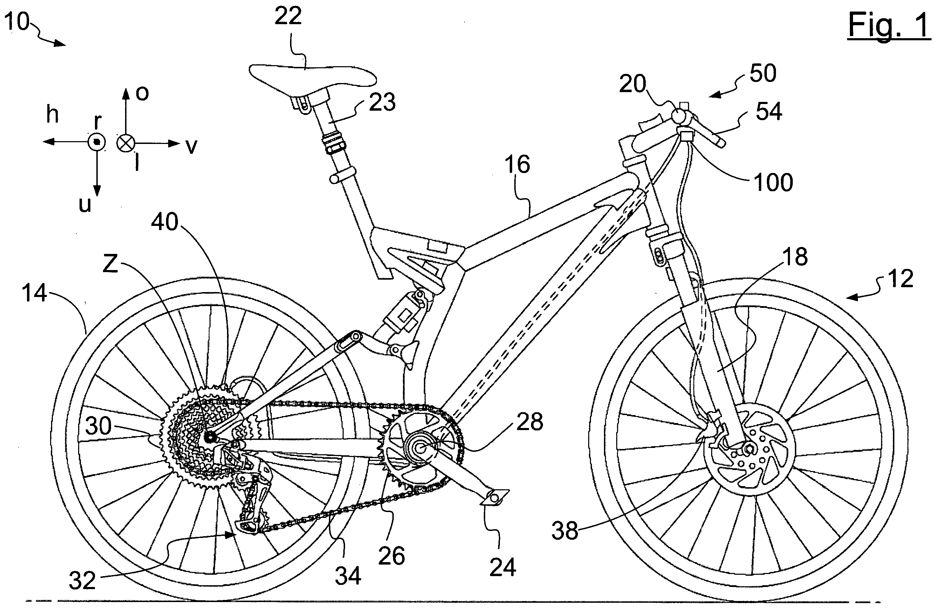

Sofern nicht explizit anders angegeben, beziehen sich in der vorliegenden Anmeldung Richtungsangaben wie vorne, hinten, oben, unten, links und rechts auf die in Figur 1 mit Pfeilen v, h, o, u, l und r veranschaulichten Richtungen, wie sie sich für einen Fahrer ergeben, der in üblicher Weise auf einem mit der Fahrradbedienvorrichtung ausgestatteten Fahrrad sitzt, welches auf einem horizontalen Untergrund steht oder fährt.

Ein in Figur 1 allgemein mit 10 bezeichnetes Fahrrad weist in an sich bekannter Weise ein Vorderrad 12, ein Hinterrad 14 und einen Rahmen 16 auf. Das Vorderrad 12 ist drehbar an unteren Enden einer Vorderradgabel 18 gelagert, welche an ihrem oberen Ende drehbar am Rahmen 16 gehalten ist und einen Lenker 20 zum Steuern des Fahrrads 10 trägt. Das Hinterrad 14 ist drehbar an einem hinteren Ende des Rahmens 16 gelagert.

Der Rahmen 16 trägt ferner einen Sattel 22 sowie eine Kurbelbaugruppe mit Tretkurbeln 24 und einem daran befestigten vorderen Kettenblatt 26. Die Kurbelbaugruppe ist um eine Tretlagerachse 28 drehbar am Rahmen montiert. Am Hinterrad 14 ist konzentrisch zur Radachse Z ein Ritzelpaket 30 montiert, welches eine Mehrzahl von Ritzeln unterschiedlicher Durchmesser, d.h. mit unterschiedlichen Zahnzahlen trägt. Im Ausführungsbeispiel ist ein Ritzelpaket mit insgesamt zwölf Ritzeln vorgesehen und das vordere Kettenblatt 26 ist als Einzelrad vorgesehen, so dass insgesamt zwölf Schaltstufen einstellbar sind. Im Rahmen der Erfindung können selbstverständlich andere Schaltungsauslegungen zum Einsatz kommen, insbesondere auch Mehrfachkettenblätter, zwischen denen mittels eines vorderen Kettenwerfers geschaltet werden kann.

Zur Einstellung der Schaltstufen des hinteren Ritzelpakets 30 kommt eine hintere Kettenschaltung mit einem hinteren Schaltwerk 32 zum Einsatz, welches ebenfalls an einem hinteren Ende des Rahmens 16 befestigt ist und Teil einer Stelleinrichtung bildet. Eine Kette 34 umläuft das Ritzelpaket 30 und das vordere Kettenblatt 26 und durchläuft das Schaltwerk 32, um Antriebskraft von dem vorderen Kettenblatt 26 auf das Ritzelpaket 30 und damit auf das Hinterrad 14 zu übertragen. Das Schaltwerk 32 ist dabei in der Lage, die Kette 34 in axialer Richtung bezüglich der Drehachse Z des Hinterrads 14 zu verstellen, um die Kette 34 wahlweise mit einem der Ritzel des Ritzelpakets 30 auszurichten und dementsprechend auf das ausgewählte Ritzel zu führen.

Zur Einstellung des Schaltwerks 32 in eine gewünschte Schaltstufe durch einen Fahrer ist am Lenker 20 auf der vom Fahrer aus gesehen rechten Seite eine Fahrradbedienvorrichtung 100 gemäß einem ersten bevorzugten Ausführungsbeispiel der Erfindung vorgesehen. Dabei überträgt die Fahrradbedienvorrichtung 100 Bedienbefehle zur Steuerung des Schaltwerks 32 drahtlos durch eine Funkverbindung zwischen einem in der Fahrradbedienvorrichtung 100 integrierten Funksender und einem im Schaltwerk 32 integrierten Funkempfänger.

Alternativ sind jedoch andere Varianten denkbar und im Rahmen der vorliegenden Erfindung nutzbar, um Bedienbefehle des Fahrers von der Fahrradbedienvorrichtung 100 an eine Komponente des Fahrrads zu übertragen, beispielsweise zur Einstellung einer Federgabel 18, einer Dämpfung oder der Höhe einer Sattelstütze 23.

Zu ergänzen ist, dass das Fahrrad vorzugsweise eine Bremsanlage, beispielsweise in Form einer vorderen Scheibenbremse 38 oder/und einer hinteren Scheibenbremse 40 umfasst. Zur Bedienung der Bremsanlage ist mindestens eine Bremsbedieneinrichtung 50 mit einem Handbremshebel 54 vorgesehen.

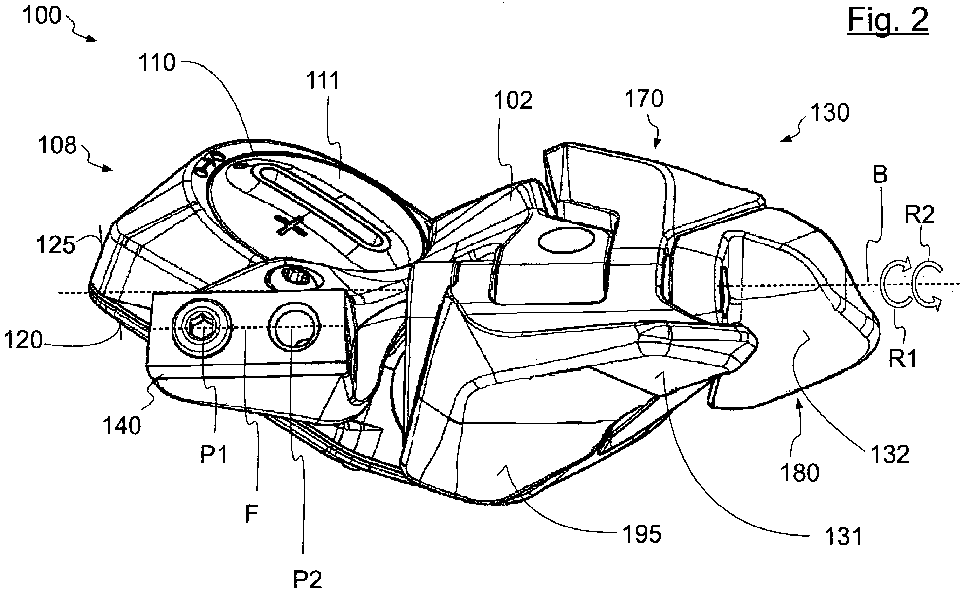

Figur 2 zeigt die Fahrradbedienvorrichtung 100 in einer perspektivischen Darstellung ohne den Lenker, die Bremsbedieneinrichtung und die Befestigungseinrichtung ungefähr unter dem Blickwinkel, unter dem sie auch der auf dem Fahrrad sitzende Fahrer (die Bedienperson) sieht.

Wie Figur 2 zeigt, umfasst die Fahrradbedienvorrichtung 100 ein Trägerelement 102, an dem eine hier nicht dargestellte Befestigungseinrichtung, beispielsweise eine übliche Schelle, an einer Linearführung 140 längs einer Führungslinie F linear verstellbar in unterschiedlichen Befestigungspositionen P1, P2 vorgesehen werden kann, um die Fahrradbedienvorrichtung 100 am Lenker 20 des Fahrrads 10 anzubringen. Dabei fällt die Schellenachse im am Lenker montierten Zustand im Wesentlichen mit der Lenkerachse zusammen.

Weiterhin ist an dem Trägerelement 102 ein Gehäuse 108 befestigt, welches ein in Fig. 2 nicht sichtbares Energiespeicherelement 101 in Form einer Knopfzelle in einem Energiespeicherfach 110, das mit einem Deckel 111 verschlossen ist, sowie eine hier ebenfalls nicht sichtbare elektronische Schaltungsanordnung 103 aufnimmt.

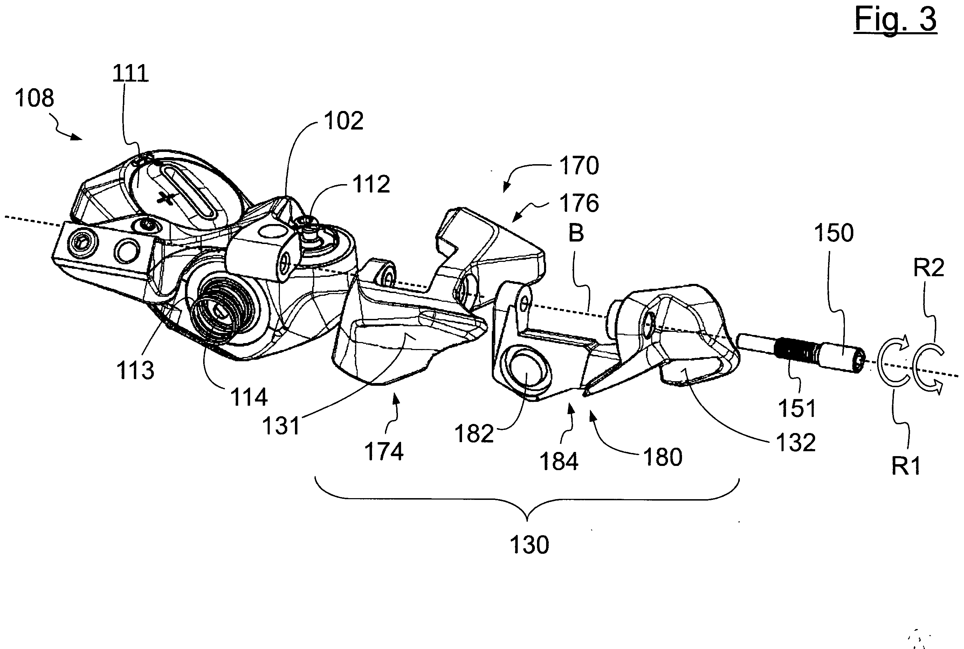

An dem Gehäuse 108 sind außerdem zwei mit der elektronischen Schaltungsanordnung verbundene Schalter 112 und 114 vorgesehen, die insbesondere in Fig.3 besser zu sehen sind, und bei denen es sich beispielsweise um Drucktaster oder Schnappschalter handeln kann.

Schließlich ist an dem Trägerelement 102 ein Bedienbauteil 130 um eine Bedienachse B schwenkbar gelagert und in die in Figur 3 dargestellte Neutralstellung vorgespannt. Aus dieser Neutralstellung ist das Bedienbauteil 130 in einer ersten Drehrichtung R1 um die Bedienachse B auslenkbar, um den ersten Schalter 112 zu betätigen, und das Bedienbauteil ist aus der Neutralstellung in einer zweiten Drehrichtung R2, die der ersten Drehrichtung R1 entgegengesetzt ist, um die Bedienachse B auslenkbar, um den zweiten Schalter 114 zu betätigen. Die Bedienachse B verläuft im montierten Zustand der Fahrradbedienvorrichtung 100 im Wesentlichen parallel zur Lenkerachse.

Das Bedienbauteil 130 ist vorliegend mehrteilig aufgebaut und umfasst ein erstes Bedienelement 170 sowie ein zweites Bedienelement 180, die jeweils einteilig ausgebildet und um die Bedienachse B schwenkbar am Trägerbauteil 102 gelagert sind. Vorzugsweise sind die Bedienelemente 170 und 180 jeweils aus Kunststoff hergestellt.

Die Form der einzelnen Komponenten ist besser in der Explosionsdarstellung der Figur 3 zu erkennen, wobei die einzelnen Bestandteile jeweils längs der Bedienachse B gegeneinander versetzt dargestellt sind.

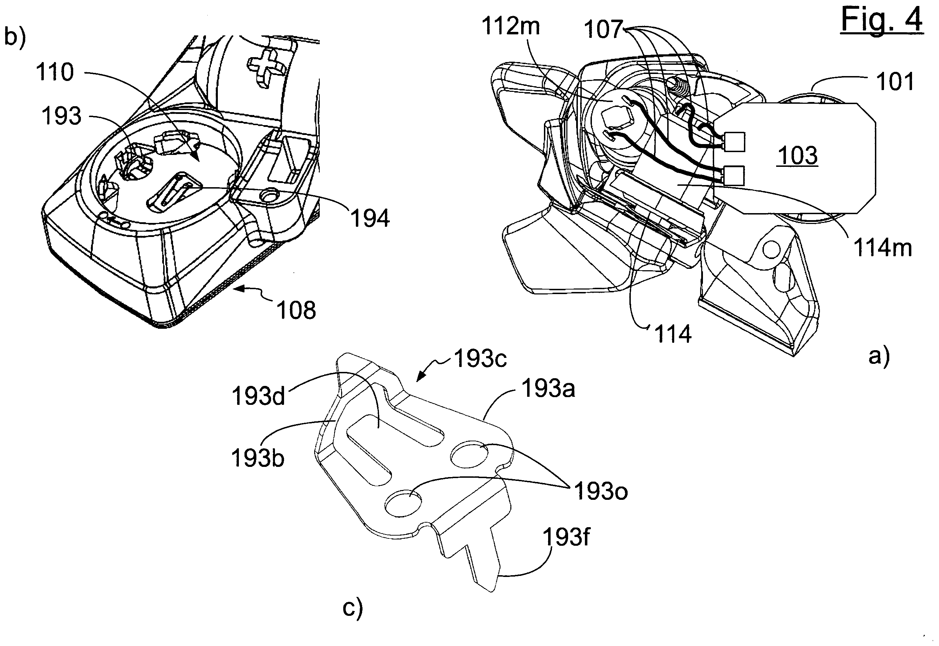

Fig. 4a) zeigt Teile des Gegenstands von Figur 2 in einer Ansicht von schräg unten, wobei das Gehäuse allerdings nicht dargestellt ist, um einen Blick auf die elektronische Schaltungsanordnung 103 und das Energiespeicherelement 101 in Form einer Knopfzelle zu ermöglichen.

Die schematisch und vereinfacht dargestellte elektronische Schaltungsanordnung 103 ist über hier nur angedeutete Leitungen 107 mit den Schaltern 112, 114 bzw. Schaltermodulen 112m, 114m verbunden und umfasst eine Elektronik zur Erzeugung eines Signals auf Basis der Stellung oder/und Betätigung der Schalter 112 und 114 sowie bevorzugt eine hier nicht dargestellte Funkantenne, um die erzeugten Signale an die jeweils anzusteuernde Komponente des Fahrrads 10 zu senden.

Die Schaltungsanordnung 103 ist vorzugsweise über in Teilabbildung 4b) wenigstens teilweise sichtbare Kontaktfedern 193 und 194 mit der Knopfzelle als Energiespeicherelement 101 verbunden.

Die in Figur 4c) vergrößert und perspektivisch dargestellte Kontaktfeder 193 ist einstückig aus Metall ausgebildet und umfasst einen im eingebauten Zustand parallel zu den planen Deckflächen der Knopfzelle ausgerichteten ersten Federschenkel 193a sowie einen im eingebauten Zustand bereichsweise seitlich an der Knopfzelle anliegenden zweiten Federschenkel 193b. Eine Biegung 193c von im unbelasteten Zustand etwas mehr als 90° verbindet die Federschenkel 193a und 193b.

Eine Zunge 193d stößt im verbauten Zustand an eine Anlagefläche des Gehäuses 108 an und trägt so dazu bei, die Kontaktfeder 193 im Gehäuse 108 auszurichten. Außerdem kann sie beim Funktionstest der Leiterplatte verwendet werden, wobei dort ein Federkontaktstift zum Testen aufgesetzt wird.

Zwei im ersten Federschenkel 193a ausgebildete Durchgangsöffnungen 193o dienen zur Befestigung der Kontaktfeder 193 im Gehäuse 108. Dafür durchgreifen vorzugsweise zwei hier nicht dargestellte Zapfen die Durchgangsöffnungen 193o und werden verschmolzen, um einen Formschlusseingriff zu erzeugen.

Schließlich dient ein vom ersten Federschenkel 193a etwa senkrecht in entgegengesetzter Richtung zum zweiten Federschenkel 193b abstehender Anlötpin 193e der Kontaktfeder 193 dazu, eine Verbindung zur elektronischen Schaltungsanordnung 103 herzustellen.

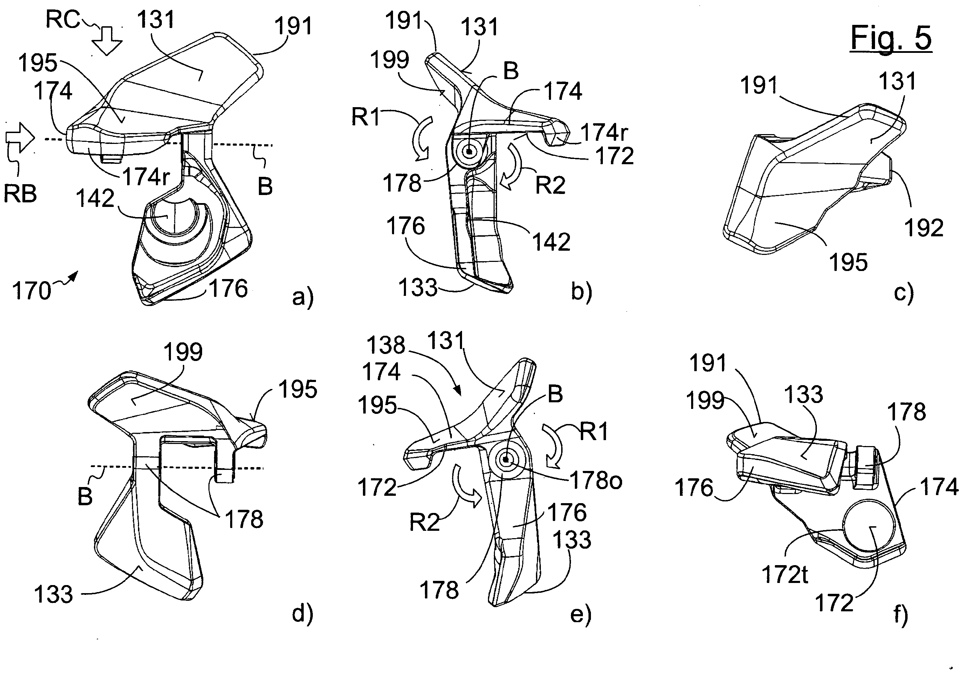

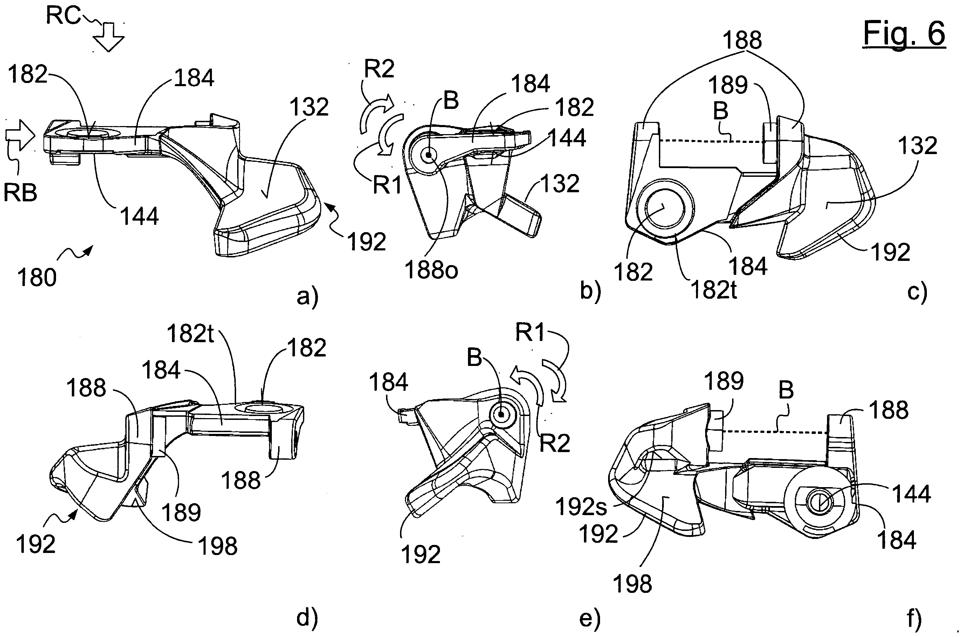

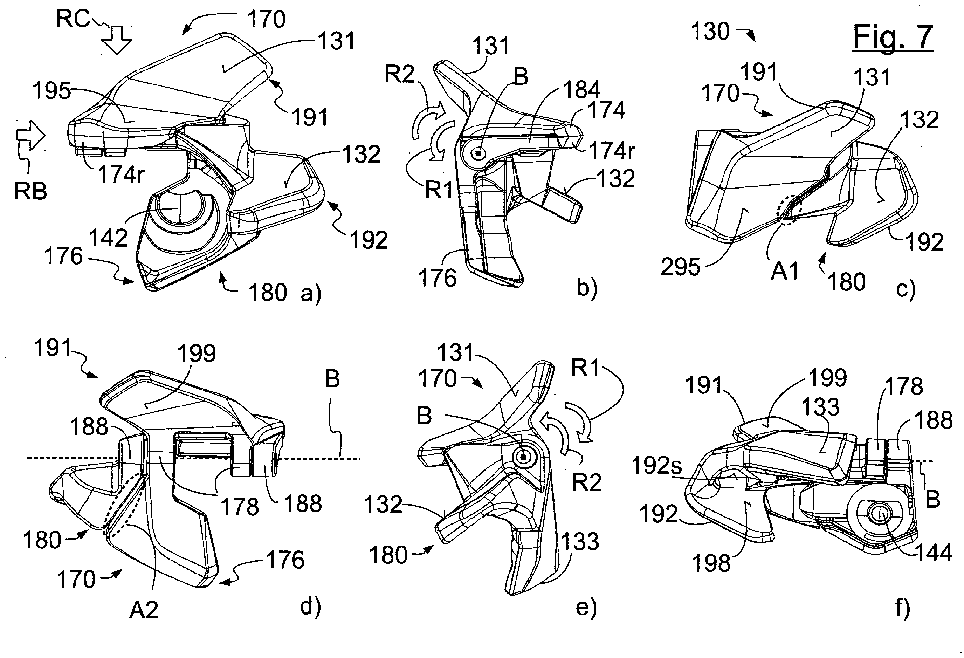

Um den Aufbau und die Funktion des Bedienbauteils 130 näher zu erläutern, sind in Figur 5 nur das erste Bedienelement 170, in Figur 6 nur das zweite Bedienelement 180 und in Figur 7 das gesamte Bedienbauteil 130 jeweils in den Teilabbildungen a) bis f) in unterschiedlichen perspektivischen Ansichten dargestellt.

Dabei sind die Blickwinkel einander entsprechender Teilabbildungen der Figuren 5 bis 7 jeweils identisch, oder in anderen Worten geht Figur 5 aus Figur 7 durch Entfernen des zweiten Bedienbauteils hervor, Figur 6 aus Figur 7 durch Entfernen des ersten Bedienbauteils.

Die jeweils untereinander dargestellten Teilabbildungen a) und d), b) und e) sowie c) und f) stellen den dargestellten Gegenstand jeweils aus entgegengesetzten Blickrichtungen dar, und die Teilabbildungen b) und c) stellen den Gegenstand von Teilabbildung a) jeweils aus der Richtung betrachtet dar, die in Teilabbildung a) mit einem Pfeil RB bzw. RC angedeutet ist.

Die Relativstellung der beiden Bedienelemente 170, 180 zueinander in Figur 7 entspricht ihrer Relativstellung in der Neutralstellung des Bedienbauteils 130.

Das in Figur 5 separat dargestellte erste Bedienelement 170 umfasst einen ersten plattenartigen Flügelabschnitt 174 und einen zweiten plattenartigen Flügelabschnitt 176, wobei sich der erste plattenartige Flügelabschnitt 174 im Wesentlichen parallel zu der Bedienachse B von dieser weg erstreckt, während sich der zweite plattenartige Flügelabschnitt 174 im Wesentlichen radial von der Bedienachse B weg erstreckt, wie insbesondere aus Fig. 5b) deutlich wird.

An der im montierten Zustand dem Gehäuse 108 zugewandten Seite des ersten plattenartigen Flügelabschnitts 174 ist eine Kontaktfläche 172 des ersten Bedienelements 170 ausgebildet, die dazu dient, bei einer direkten Auslenkung des ersten Bedienelements 170 um die Bedienachse B in der zweiten Drehrichtung R2 (im Uhrzeigersinn in Teilabbildung b) der Figuren 5 bis 7) mit der Kontaktfläche 182 des zweiten Bedienelements 180 in Wechselwirkung zu treten und so das zweite Bedienelement 180 in der zweiten Drehrichtung R2 mitzubewegen, so dass sich das Bedienbauteil 130 als Einheit bewegt.

An der im montierten Zustand dem Gehäuse 108 zugewandten Seite des zweiten plattenartigen Flügelabschnitts 176 ist eine Schalterbetätigungsfläche 142 des ersten Bedienelements 170 ausgebildet, die dazu dient, bei einer Auslenkung des ersten Bedienelements 170 aus der Neutralstellung in der ersten Drehrichtung R1 den ersten Schalter 112 zu betätigen.

Die Kontaktfläche 172 und die Schalterbetätigungsfläche 142 des ersten Bedienelements 170 sind unter einem Winkel von 80° bis 100° zueinander orientiert, vorzugsweise unter einem Winkel von etwa 90° (vgl. Fig. 6b) und 6e)).

Von dem ersten plattenartigen Flügelabschnitt 174 des ersten Bedienelements 170 steht ein weiterhin ein Bedienvorsprung 191 bezüglich der Bedienachse B radial und axial nach außen vor, wobei auf der im montierten Zustand dem Fahrer zugewandten Seite des Bedienvorsprungs 191 eine erste Daumen-Angriffsfläche 131 ausgebildet ist, und auf der Rückseite eine Angriffsfläche 199 für einen der übrigen Finger.

Auf der im montierten Zustand dem Gehäuse 108 abgewandten Seite des zweiten plattenartigen Flügelabschnitts 176 ist eine senkrecht zur Bedienachse B konvex gekrümmte Finger-Bedienfläche 133 vorgesehen, die beispielsweise mit der Zeigefingerbeuge des Fahrers in beiden Drehrichtungen R1 und R2 bedient werden kann, während die übrigen Finger den Lenkergriff umfassen.

Auf der im montierten Zustand dem Gehäuse 108 abgewandten Seite des ersten plattenartigen Flügelabschnitts 174 ist eine in erster Näherung plane dritte Daumen-Angriffsfläche 195 vorgesehen, die in die erste Daumen-Angriffsfläche 131 übergeht und mit dieser zusammen eine flache, muldenartige Struktur 138 für den Daumen der Bedienperson bildet.

Zur Montage am Trägerelement 102 sind zwei axial voneinander beabstandete Lagerabschnitte 178 mit fluchtenden Durchgangsöffnungen 178o vorgesehen, von denen einer in einem Verbindungsbereich zwischen dem ersten plattenartigen Flügelabschnitt 174 und dem zweiten plattenartigen Flügelabschnitt 176 vorgesehen ist, der andere in einem Randbereich des zweiten plattenartigen Flügelabschnitts 176.

Das in Figur 6 separat dargestellte zweite Bedienelement 180 umfasst einen plattenartigen Flügelabschnitt 184, der sich im Wesentlichen radial von der Bedienachse B weg erstreckt (vgl. Fig. 6b).

An der im montierten Zustand der Kontaktfläche 172 des ersten Bedienelements 170 zugewandten Seite des plattenartigen Flügelabschnitts 184 ist die Kontaktfläche 182 des zweiten Bedienelements 180 ausgebildet, und auf der entgegengesetzten Seite ist eine Schalterbetätigungsfläche 144 zur Betätigung des zweiten Schalters 114 vorgesehen.

Von dem plattenartigen Flügelabschnitt 184 des zweiten Bedienelements 180 steht weiterhin ein Bedienvorsprung 192 bezüglich der Bedienachse B radial und axial nach außen vor, wobei auf der im montierten Zustand dem Fahrer zugewandten Seite des Bedienvorsprungs 192 eine zweite Daumen-Angriffsfläche 132 ausgebildet ist, und auf der dem Fahrer abgewandten Rückseite eine Angriffsfläche 198 für einen der übrigen Finger. Weiterhin ist auf der dem Fahrer abgewandten Rückseite des Bedienvorsprungs 192 eine Stufe 192s (vgl. Fig. 6f)) ausgebildet, die beispielsweise mit dem Zeigefinger gegriffen und durch eine Zugbewegung betätigt werden kann.

Zur Montage am Trägerelement 102 sind zwei axial voneinander beabstandete Lagerabschnitte 188 mit fluchtenden Durchgangsöffnungen 188o vorgesehen. Der axiale Abstand der Lagerabschnitte 188 ist dabei so gewählt, dass im montierten Zustand die Lagerabschnitte 178 des ersten Bedienelements 170 zwischen den Lagerabschnitten 188 des zweiten Bedienelements 180 angeordnet sind (vgl. Fig. 7d)).

Zur Vormontage der beiden Bedienelemente 170, 180 zum Bedienbauteil 130 kann beispielsweise auf der inneren Seite eines der Lagerabschnitte 188 des zweiten Bedienelements 180 ein hohlzylindrischer Vorsprung 189 vorgesehen sein, der in die Durchgangsöffnung 178o des unmittelbar benachbarten Lagerabschnitts 178 des ersten Bedienelements 180 passt.

Wie Figur 7 in den Teilabbildungen c) und d) illustriert, sind die Bedienelemente so ausgebildet, dass in der Neutralstellung des Bedienbauteils 130 von außen sichtbare und aneinander angrenzende Oberflächen des ersten und des zweiten Bedienelements 170 und 180 zumindest in den Abschnitten A1 und A2 stufenlos ineinander übergehen.

Neben einem ansprechenden, einheitlichen Aussehen des Bedienbauteils 130 wird hierdurch das Risiko verkleinert, dass ein Finger der Bedienperson in einem Spalt oder einer Stufe zwischen den Bedienelementen hängen bleibt oder eingeklemmt wird.

Zum gleichen Zweck wird in der Neutralstellung des Bedienbauteils 130 ein Umfangsrand des plattenartigen Flügelabschnitts 184 des zweiten Bedienelements 180 von einem überhängenden Rand 174r des ersten plattenartigen Flügelabschnitts 174 des ersten Bedienelements 170 zumindest abschnittsweise überdeckt (vgl. Fig. 7a) und 7b)).

Es ist nachzutragen, dass an den Kontaktflächen 172, 182 des ersten und des zweiten Bedienelements 170, 180 jeweils ein Federteller 172t, 182t vorgesehen sein kann, zur Abstützung der Enden einer im montierten Zustand zwischen den Kontaktflächen 172, 182 angeordneten Druckfeder (nicht dargestellt), die unerwünschte Bewegungen des jeweils anderen Bedienelements verhindern soll, wenn das erste Bedienelement 170 in der ersten Drehrichtung R1 oder das zweite Bedienelement 180 in der zweiten Drehrichtung R2 jeweils separat aus der Neutralstellung ausgelenkt wird.

Die zweiteilige Form des Bedienbauteils 130 und die separate Auslenkbarkeit des ersten Bedienelements 170 in der ersten Drehrichtung R1 und des zweiten Bedienelements 180 in der zweiten Drehrichtung R2 ermöglicht es insbesondere, eine zusätzliche Funktion oder Komponente des Fahrrads anzusteuern, indem beispielsweise durch gleichzeitige Druck-Betätigung der zweiten Daumen-Angriffsfläche 132 und der Finger-Angriffsfläche 133 das erste Bedienelement 170 in der ersten Drehrichtung R1 und dabei das zweite Bedienelement 180 in der zweiten Drehrichtung ausgelenkt werden, so dass beide Schalter 112, 114 gleichzeitig betätigt werden.

An ausgewählten einzelnen oder mehreren der Angriffsflächen kann jeweils (anders als dargestellt) eine Oberflächen-Strukturierung oder ein reliefartiges Muster vorgesehen sein, um die Gefahr eines Abrutschens des jeweiligen Fingers der Bedienperson zu verringern.

Aufgrund der modularen Bauweise der Fahrradbedienvorrichtung ist es denkbar, das Bedienbauteil 130 auswechselbar an dem Trägerelement 102 vorzusehen, so dass das Bedienbauteil ergonomisch oder/und haptisch an die Wünsche des Fahrers angepasst werden kann. Die vorliegend vorgesehene (Schraub-)Verbindung zwischen Trägerelement 102 und Bedienbauteil 130 mit dem Achsbolzen 150 erlaubt eine einfache und schnelle Montage. Insbesondere ist es möglich, einen Bausatz für eine erfindungsgemäße Fahrradbedienvorrichtung mit mehreren in Form oder/und Oberfläche verschiedenen, auswechselbaren Bedienbauteilen bereitzustellen.

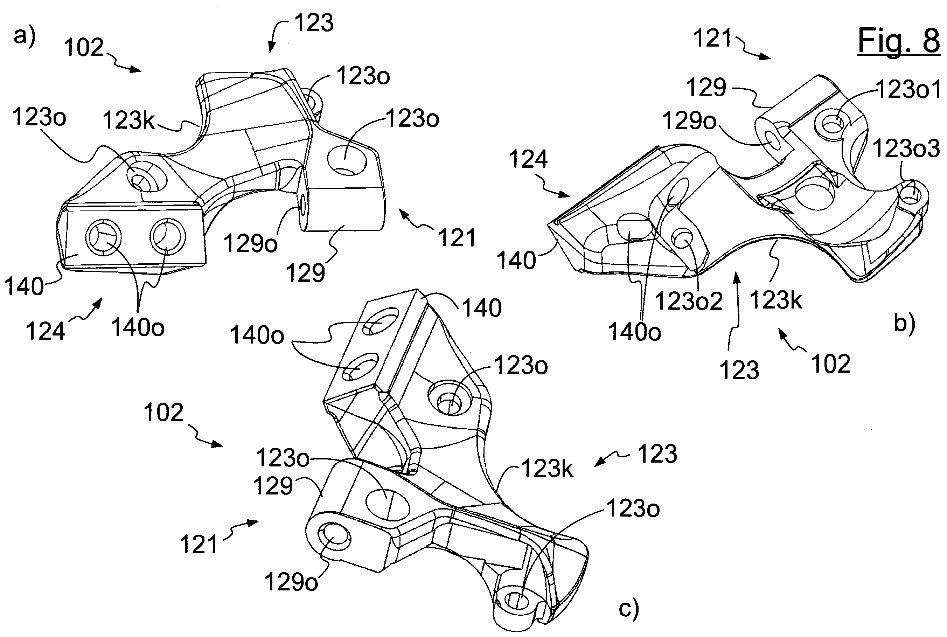

Das in Figur 8 in den Teilabbildungen a) bis c) in verschiedenen Ansichten aus unterschiedlichen Blickwinkeln dargestellte Trägerelement 102 ist vorliegend einteilig ausgebildet, vorzugsweise aus Metall, beispielsweise aus Aluminium.

Es weist einen Bedienbauteil-Befestigungsabschnitt 121, einen Schellen-Befestigungsabschnitt 124 sowie einen Gehäuse-Befestigungsabschnitt 123 auf.

An dem Schellen-Befestigungsabschnitt 124 kann eine Linearführung 140 vorgesehen sein. Diese ist vorzugsweise in Form einer länglichen Schiene mit zwei Befestigungsöffnungen 140o ausgebildet, welche die beiden Befestigungspositionen P1 und P2 für eine Befestigungseinrichtung am Trägerelement 102 definieren.

Der Bedienbauteil-Befestigungsabschnitt 121 des Trägerelements 102 umfasst beispielsweise einen Lagervorsprung 129 mit einer Durchgangsöffnung 129o, in die der Achsbolzen 150 eingesetzt wird, und welche so die Lage der Bedienachse B am Trägerelement 102 definiert. Die Durchgangsöffnung 129o weist bevorzugt ein Innengewinde auf, in die ein Außengewindeabschnitt 151 des Achsbolzens 150 (vgl. Fig. 3) eingeschraubt werden kann.

An dem Gehäuse-Befestigungsabschnitt 123 sind vorzugsweise drei Befestigungsöffnungen 123o vorgesehen, an denen das Trägerelement 102 mit entsprechenden Befestigungselementen am Gehäuse 108 fixiert werden kann.

Um eine stabile Befestigung unter Berücksichtigung der auf die Vorrichtung bei der Betätigung der Schalter wirkenden Kräfte zu erreichen, befindet sich von den drei Befestigungsöffnungen 123o vorzugsweise eine erste 123o1 in der Nähe des Bedienbauteil-Befestigungsabschnitts 121, eine zweite 123o2 in der Nähe des Schellen-Befestigungsabschnitts 124 und eine dritte 123o3 mit Abstand von der Verbindungsgeraden durch die erste und die zweite Befestigungsöffnung 123o1, 123o2 (vgl. Fig. 7b).

Um eine stabile Befestigung des Gehäuses 108 bei guter Erreichbarkeit des Energiespeicherfachs 110 zu gewährleisten weist der Gehäuse-Befestigungsabschnitt 123 in dem Bereich, in dem er im montierten Zustand an das Energiespeicherfach 110 angrenzt, vorzugsweise weiter eine Kante 123k auf, die der (kreisförmigen) Kontur des Deckels 11 des Energiespeicherfachs folgt.

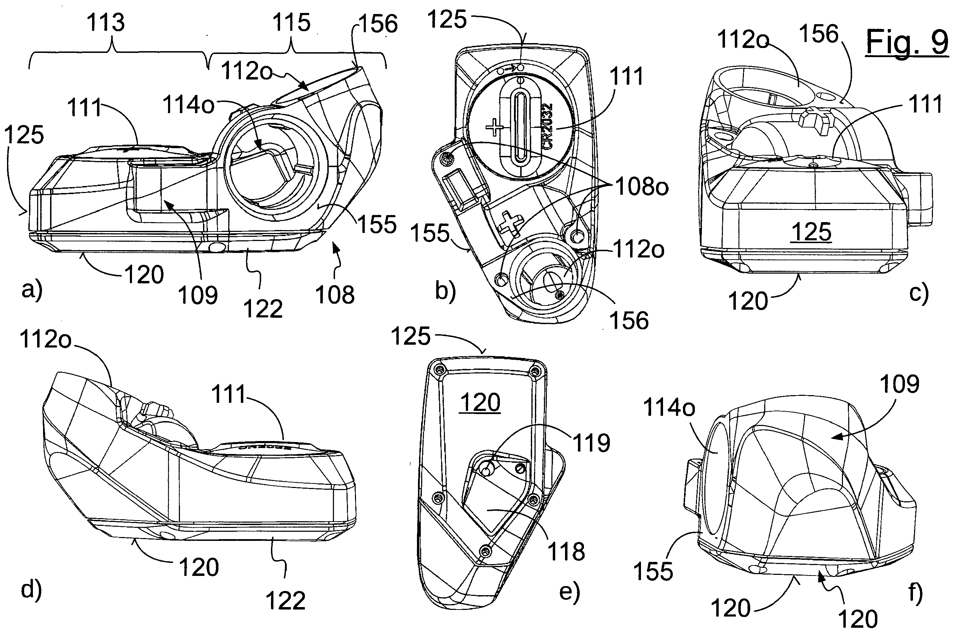

Das in Figur 9 in verschiedenen perspektivischen Ansichten dargestellte Gehäuse 108 ist vorzugsweise mehrteilig mit einem Gehäusekörper 109 und einem abnehmbaren unteren Gehäusedeckel 122 gebildet, wobei der Gehäusedeckel 122 vorliegend eine untere plane Deckfläche 120 aufweist.

Das Gehäuse 108 umfasst einen Elektronikabschnitt 113 und einen Schalterabschnitt 115 (vgl. Fig. 9a)).

In dem Elektronikabschnitt 113 mit der Grundform eines flachen Quaders sind das Energiespeicherelement 101 in Form einer Knopfzelle in einem Energiespeicherfach 110 sowie die elektronische Schaltungsanordnung 103 vorzugsweise unterhalb der Knopfzelle vorgesehen. Die Deckflächen des Elektronikabschnitts 113, insbesondere die untere plane Deckfläche 120 und eine seitliche plane Deckfläche 125, sind in erster Näherung plan und verlaufen alle schräg zur Bedienachse B.

Auf die Knopfzelle kann nach Entfernen eines an einer oberen Deckfläche des Gehäuses 108 vorgesehenen Energiespeicherfach-Deckels 111 zugegriffen werden, auf die Schaltungsanordnung nach Entfernen des unteren Gehäusedeckels 122 sowie ggf. einer weiteren Trennplatte.

Weiterhin kann an der Unterseite des unteren Gehäusedeckels 122 vorzugsweise an einem zurückgesetzten Abschnitt 118 ein Schalter 119 vorgesehen sein, der beispielsweise dazu dient, bei Inbetriebnahme der Fahrradbedienvorrichtung eine Kopplung ("pairing") zwischen der Fahrradbedienvorrichtung 100 und der mit dieser anzusteuernden Komponente vorzunehmen. Alternativ oder zusätzlich könnte mit diesem Schalter auch ein anderer Modus oder eine andere Funktion der Fahrradbedienvorrichtung 100 gewählt werden. Bei Kopplung mit einem Schaltwerk könnte zum Beispiel zwischen einem Modus "Grobjustierung" und "Feinjustierung" umgeschaltet werden, wobei im Modus "Grobjustierung" durch Bestätigung der Schalter 112, 114 zwischen benachbarten Schaltstufen umgeschaltet wird, während im Modus "Feinjustierung" zwischen verschiedenen (Trimm-)Einstellungen der gleichen Schaltstufe umgeschaltet wird. Grundsätzlich ist der Schalter 119 bevorzugt dazu konzipiert, Voreinstellungen vor dem Beginn einer Fahrt vorzunehmen.

Der Schalterabschnitt 115 des Gehäuses 108 weist runde Aufnahmeöffnungen 112o und 114o auf, die zur Aufnahme von zylindrischen Schaltermodulen mit den Schaltern 112 und 114 dienen, welche in Figur 9 nicht dargestellt sind. Lediglich im Bereich des Schalterabschnitts 115 befinden sich im vorliegenden Ausführungsbeispiel Deckflächenabschnitte 155, 156 des Gehäuses 108, die nicht schräg sondern annähernd parallel zur Bedienachse B ausgerichtet sind, wenn das Gehäuse 108 am Trägerelement 102 befestigt ist. In den in Teilabbildungen 9a) und 9b) dargestellten Deckflächenabschnitte 155 bzw. 156 sind dabei die Aufnahmeöffnungen 112o bzw. 114o vorgesehen.

Die im Wesentlichen senkrecht zueinander angeordneten Deckflächenabschnitte 155, 156 im Schalterabschnitt 115 sind jeweils schräg zu der planen unteren Deckfläche 120 und zu der seitlichen Deckfläche 125 im Elektronikabschnitt 113 angeordnet. In diesem Sinne ist der Schalterabschnitt 115 winkelig zum Elektronikabschnitt 113 angeordnet, was eine kompakte Bauform des Gehäuses 108 begünstigt.

An der Oberseite des Gehäuses 108 sind drei Befestigungsöffnungen 108o vorgesehen, die zur Befestigung des Gehäuses 108 am Trägerelement 102 dienen.

Die Form des Gehäuses 108 ist darauf abgestellt, möglichst wenig Volumen einzunehmen und dabei eine ergonomisch und aerodynamisch günstige Positionierung des Bedienbauteils 130 am Lenker 20 zu ermöglichen.

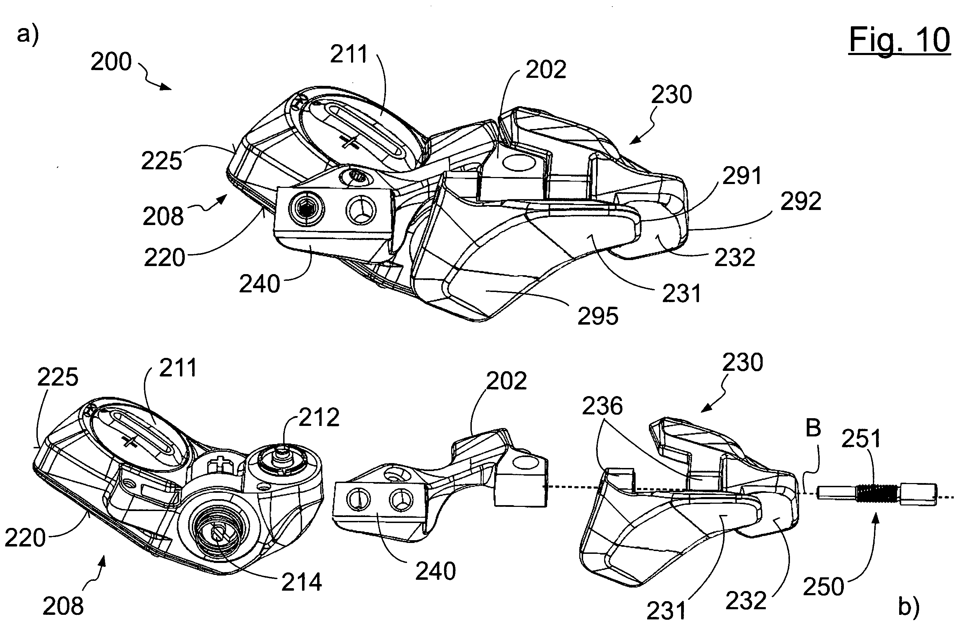

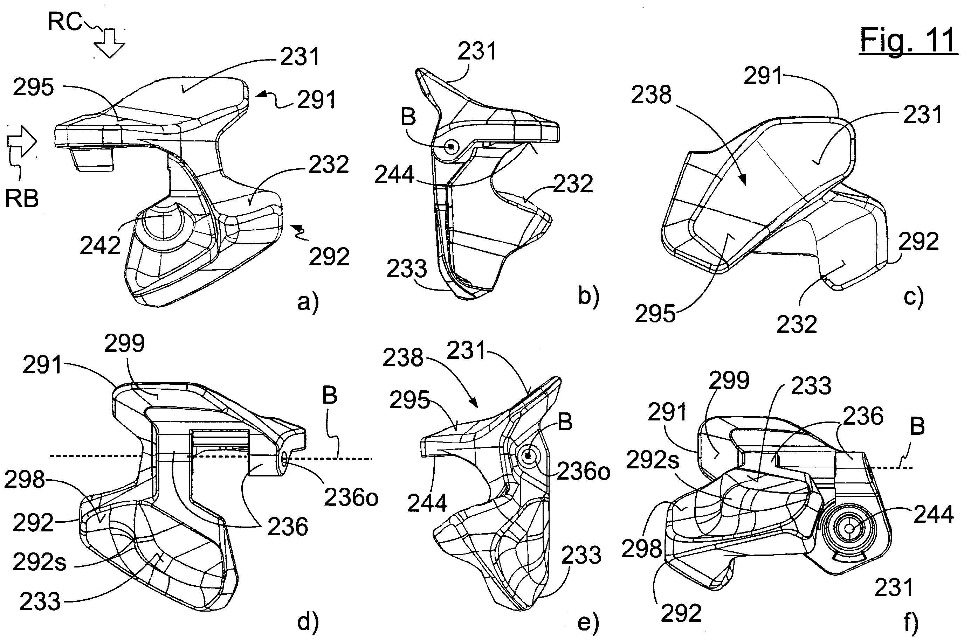

Die Figuren 10 und 11 illustrieren ein weiteres Ausführungsbeispiel einer Fahrradbedienvorrichtung 200, die in erster Linie nur insoweit näher beschrieben wird, als sie sich vom ersten Ausführungsbeispiel unterscheidet. Ansonsten wird auf die vorstehende Beschreibung des ersten Ausführungsbeispiels verwiesen Merkmale des zweiten Ausführungsbeispiels, die solchen des ersten Ausführungsbeispiels entsprechen, sind dabei mit Bezugszeichen versehen, die aus den Bezugszeichen der entsprechenden Merkmale des ersten Ausführungsbeispiels durch Addition der Zahl 100 hervorgehen. Sofern Buchstaben als oder in Bezugszeichen verwendet werden, werden für entsprechende Merkmale beider Ausführungsbeispiele jeweils die gleichen Buchstaben verwendet.

Das zweite Ausführungsbeispiel einer Fahrradbedienvorrichtung 200 unterscheidet sich vom ersten Ausführungsbeispiel im Wesentlichen dadurch, dass das Bedienbauteil 230 einteilig aufgebaut ist.

Zur drehbaren Lagerung des Bedienbauteils am Trägerelement 202 sind zwei axial beabstandete Lagerabschnitte 236 mit fluchtenden Durchgangsöffnungen 236o vorgesehen, durch die der Achsbolzen 250 eingesetzt und mit dem Trägerelement 202 verschraubt wird.

Wie insbesondere ein Vergleich der Figuren 11 und 7 zeigt, ist die Form des einteilig ausgebildeten Bedienbauteils 230 ansonsten sehr ähnlich zu derjenigen des zweiteilig ausgebildeten Bedienbauteils 130 des ersten Ausführungsbeispiels.

Insbesondere weist das Bedienbauteil 230 einen ersten Bedienvorsprung 291 und einen zweiten Bedienvorsprung 292 auf, die radial und axial vorstehen und sowohl entlang der Bedienachse B wie auch in einer Richtung senkrecht dazu versetzt zueinander angeordnet sind, wobei auf einer dem Fahrer zugewandten Vorderseite des ersten Bedienvorsprungs 291 eine erste Daumen-Angriffsfläche 231, auf einer Vorderseite des zweiten Bedienvorsprungs 292 eine zweite Daumen-Angriffsfläche 232 ausgebildet ist, die unter einem Winkel von weniger als 30 Grad zueinander orientiert sind (bevorzugt fast parallel zueinander) und die so angeordnet sind, dass durch Betätigung der ersten Daumen-Angriffsfläche 231 der erste Schalter betätigbar ist und durch Betätigung der zweiten Daumen-Angriffsfläche 232 der zweite Schalter betätigbar ist.

Auf der Rückseite des ersten Bedienvorsprungs 291 ist eine Angriffsfläche 299 für einen der übrigen Finger ausgebildet, ebenso eine Angriffsfläche 298 auf der Rückseite des zweiten Bedienvorsprungs 292.

Weiterhin umfasst das Bedienbauteil eine senkrecht zur Bedienachse konvex gekrümmte Finger-Angriffsfläche 233, die mit der Zeigefingerbeuge einer Hand bedient werden kann, sowie am Übergang zwischen der Angriffsfläche 289 und der Finger-Angriffsfläche 233 eine Stufe 292s, die beispielsweise mit dem Zeigefinger gegriffen werden kann.

Schließlich umfasst das Bedienbauteil 230 noch eine dritte zumindest näherungsweise plane Daumen-Angriffsfläche 295, die an die erste Daumen-Angriffsfläche 231 angrenzt und mit dieser zusammen eine flache, muldenartige Struktur 238 für den Daumen der Bedienperson bildet.

Beispielsweise führt ein Drücken der ersten Daumen-Angriffsfläche 231 zu einer Auslenkung des Bedienbauteils 230 in der ersten Drehrichtung R1 zur Betätigung des ersten Schalters 212.

Weiterhin führt ein Drücken der zweiten Daumen-Angriffsfläche 232 zu einer Auslenkung des Bedienbauteils 230 in der zweiten Drehrichtung R2 zur Betätigung des zweiten Schalters 214.
Ebenso führt ein Drücken der dritten Daumen-Angriffsfläche 295 zu einer Auslenkung des Bedienbauteils 230 in der zweiten Drehrichtung R2 zur Betätigung des zweiten Schalters 214.

Je nach Vorliebe des Fahrers kann ein Schalten in beiden Richtungen also zum einen erzielt werden, indem der Daumen in der muldenartigen Struktur 238 liegen bleibt und entweder die erste oder die dritte Daumen-Angriffsfläche 231, 295 betätigt.

Zum anderen kann ein Schalten in beiden Richtungen erzielt werden, indem der Daumen zwischen der ersten und der zweiten Daumen-Angriffsfläche 231, 232 wechselt.

Durch Drücken oder Ziehen der verschiedenen Angriffsflächen 231, 232, 295, 298, 299 und 233 mit dem Daumen oder Zeigefinger ergeben sich damit zahlreiche Bedienoptionen zur Betätigung der beiden Schalter 212 und 214.

## Patentansprüche

1. Fahrradbedienvorrichtung (100) zur Ansteuerung wenigstens einer Komponente (32) eines Fahrrads (10), umfassend:
- ein Trägerelement (102), an dem eine Befestigungseinrichtung zur Fixierung der Fahrradbedienvorrichtung (100) am Lenker (20) eines Fahrrads (10) anbringbar oder vorgesehen ist,
- ein an dem Trägerelement (102) vorgesehenes Gehäuse (108) mit einer in dem Gehäuse (108) aufgenommenen elektronischen Schaltungsanordnung (103) wobei an dem Gehäuse (108) ein erster und ein zweiter jeweils mit der elektronischen Schaltungsanordnung (103) verbundener Schalter (112, 114) vorgesehen ist,
- ein an dem Trägerelement (102) um eine Bedienachse (B) schwenkbar gelagertes und in eine Neutralstellung vorgespanntes Bedienbauteil (130), welches aus der Neutralstellung in einer ersten Drehrichtung (R1) um die Bedienachse (B) auslenkbar ist, um den ersten Schalter (112) zu betätigen, und in einer der ersten Drehrichtung (R1) entgegengesetzten zweiten Drehrichtung (R2) aus der Neutralstellung auslenkbar ist, um den zweiten Schalter (114) zu betätigen,
**dadurch gekennzeichnet, dass** das Bedienbauteil (130) ein erstes Bedienelement (170) und ein zweites Bedienelement (180) umfasst, die separat voneinander jeweils einteilig ausgebildet und jeweils um die Bedienachse (B) schwenkbar an dem Trägerelement (102) gelagert sind.

2. Fahrradbedienvorrichtung (100) nach Anspruch 1,
**dadurch gekennzeichnet, dass** die beiden Bedienelemente (170, 180) derart ausgebildet und gelagert sind, dass ausgehend von der Neutralstellung des Bedienbauteils (130):
- durch eine direkte Auslenkung des ersten Bedienelements (170) in der zweiten Drehrichtung (R2) das zweite Bedienelement (180) in der zweiten Drehrichtung (R2) mitbewegt wird,
- durch eine direkte Auslenkung des zweiten Bedienelements (180) in der ersten Drehrichtung (R1) das erste Bedienelement (170) in der ersten Drehrichtung (R1) mitbewegt wird,
- bei einer direkten Auslenkung des ersten Bedienelements (170) in der ersten Drehrichtung (R1) das zweite Bedienelement (180) nicht in der ersten Drehrichtung (R1) mitbewegt wird, und
- bei einer direkten Auslenkung des zweiten Bedienelements (180) in der zweiten Drehrichtung (R2) das erste Bedienelement (170) nicht in der zweiten Drehrichtung (R2) mitbewegt wird.

3. Fahrradbedienvorrichtung (100) nach Anspruch 2,
**dadurch gekennzeichnet, dass** die beiden Bedienelemente (170, 180) weiter derart ausgebildet und gelagert sind, dass ausgehend von der Neutralstellung des Bedienbauteils (130) gleichzeitig das erste Bedienelement (170) in der ersten Drehrichtung (R1) auslenkbar ist und das zweite Bedienelement (180) in der zweiten Drehrichtung (R2) auslenkbar ist, um sowohl den ersten Schalter (112) als auch den zweiten Schalter (114) zu betätigen.

4. Fahrradbedienvorrichtung (100) nach Anspruch 2 oder 3,
**dadurch gekennzeichnet, dass** das erste Bedienelement (170) und das zweite Bedienelement (180) jeweils eine Kontaktfläche (172, 182) aufweisen, wobei die Kontaktflächen (172, 182) des ersten und des zweiten Bedienelements (170, 180) sich jeweils im Wesentlichen radial weg von der Bedienachse (B) oder parallel zu dieser erstrecken und im montierten Zustand der Fahrradbedienvorrichtung (100) einander zugewandt sind.

5. Fahrradbedienvorrichtung (100) nach Anspruch 4,
**dadurch gekennzeichnet, dass** sie eine Druckfeder aufweist, deren eines Ende sich an der Kontaktfläche (172) des ersten Bedienelements (170) abstützt und deren anderes Ende sich an der Kontaktfläche (182) des zweiten Bedienelements (180) abstützt.

6. Fahrradbedienvorrichtung (100) nach Anspruch 4 oder 5,
**dadurch gekennzeichnet, dass** das zweite Bedienelement (180) einen plattenartigen Flügelabschnitt (184) umfasst, der sich im Wesentlichen radial von der Bedienachse (B) weg oder parallel zu dieser erstreckt, wobei auf einer ersten Seite des plattenartigen Flügelabschnitts (184) die Kontaktfläche (182) des zweiten Bedienelements (180) und auf einer der ersten Seite entgegengesetzten zweiten Seite des plattenartigen Flügelabschnitts (184) eine Schalterbetätigungsfläche (144) zur Betätigung des zweiten Schalters (114) ausgebildet ist.

7. Fahrradbedienvorrichtung (100) nach Anspruch 6,
**dadurch gekennzeichnet, dass** das erste Bedienelement (170) einen ersten plattenartigen Flügelabschnitt (174) und einen zweiten plattenartigen Flügelabschnitt (176) umfasst, die sich jeweils im Wesentlichen radial von der Bedienachse (B) weg oder parallel zu dieser erstrecken, wobei an einer Seite des ersten Flügelabschnitts (174) die Kontaktfläche (172) des ersten Bedienelements (170) ausgebildet ist und auf einer der Kontaktfläche (172) des ersten Bedienelements (170) zugewandten Seite des zweiten Flügelabschnitts (176) eine Schalterbetätigungsfläche (142) zur Betätigung des ersten Schalters (112) ausgebildet ist.

8. Fahrradbedienvorrichtung (100) nach einem der vorhergehenden Ansprüche, **dadurch gekennzeichnet, dass** in der Neutralstellung des Bedienbauteils (130) von außen sichtbare und aneinander angrenzende Oberflächen des ersten und des zweiten Bedienelements (170, 180) zumindest abschnittsweise stufenlos ineinander übergehen.

9. Fahrradbedienvorrichtung (100) nach einem der vorhergehenden Ansprüche, **dadurch gekennzeichnet, dass** das Bedienbauteil (130; 230) eine erste, eine zweite und eine dritte Daumen-Angriffsfläche (131, 132, 195; 231, 232, 295) umfasst, die jeweils für die Betätigung durch einen Daumen einer Bedienperson zur Betätigung von einem der Schalter (112, 114; 212, 214) ausgelegt sind, so dass durch Betätigung der ersten Daumen-Angriffsfläche (131; 231) der erste Schalter (112; 212) betätigbar ist und durch Betätigung der zweiten Daumen-Angriffsfläche (132; 232) der zweite Schalter (114; 214) betätigbar ist.

10. Fahrradbedienvorrichtung (100; 200) nach Anspruch 9,
**dadurch gekennzeichnet, dass** die erste und die zweite Daumen-Angriffsfläche (131, 132; 231, 232) unter einem Winkel von weniger als 30° zueinander angeordnet sind.

11. Fahrradbedienvorrichtung (100; 200) nach Anspruch 10,
**dadurch gekennzeichnet, dass** die erste und die zweite Daumen-Angriffsfläche (131, 132; 231, 232) sowohl längs der Bedienachse (B) wie auch in einer Richtung senkrecht zur Bedienachse versetzt zueinander angeordnet sind.

12. Fahrradbedienvorrichtung (100; 200) nach einem der Ansprüche 9 bis 11,
**dadurch gekennzeichnet, dass** die erste oder/und die zweite Daumen-Angriffsfläche (131, 132; 231, 232), vorzugsweise beide, wenigstens abschnittsweise auf einem jeweiligen radial oder/und axial vorstehenden, plattenartig ausgebildeten Bedienvorsprung (191, 192; 291, 292) ausgebildet ist bzw. sind.

13. Fahrradbedienvorrichtung (100) nach Anspruch 9, vorzugsweise in Kombination mit wenigstens einem der übrigen vorhergehenden Ansprüche, **dadurch gekennzeichnet, dass** die erste Daumen-Angriffsfläche (131) am ersten Bedienelement (170) und die zweite Daumen-Angriffsfläche (132) am zweiten Bedienelement (180) ausgebildet ist.

14. Fahrradbedienvorrichtung (100; 200) nach einem der Ansprüche 9 bis 13,
**dadurch gekennzeichnet, dass** die dritte Daumen-Angriffsfläche (195; 295) an die erste Daumen-Angriffsfläche (131; 231) angrenzt oder in diese übergeht und so ausgebildet und angeordnet ist, dass durch Betätigung der dritten Daumen-Angriffsfläche (195; 295) der zweite Schalter (114; 214) betätigbar ist, wobei die erste und die dritte Daumen-Angriffsfläche (131, 195; 231, 295) gemeinsam bevorzugt eine muldenartige Struktur (138; 238) für den Daumen der Bedienperson bilden.

## Claims

1. Bicycle operating apparatus (100) for controlling at least one component (32) of a bicycle (10), comprising:
- a carrier element (102) to or on which a fastening device for fixing the bicycle operating apparatus (100) to the handlebar (20) of a bicycle (10) is attachable or provided,
- a housing (108), provided on the carrier element (102), having an electronic circuit arrangement (103) accommodated in the housing (108), wherein a first and a second switch (112, 114), which are each connected to the electronic circuit arrangement (103), are provided on the housing (108),
- an operating component (130), which is mounted on the carrier element (102) so as to be pivotable about an operating axis (B) and is preloaded into a neutral position, said operating component (130) being able to be deflected out of the neutral position in a first direction of rotation (R1) about the operating axis (B) in order to actuate the first switch (112), and being able to be deflected out of the neutral position in a second direction of rotation (R2) opposite to the first direction of rotation (R1) in order to actuate the second switch (114),
**characterized in that** the operating component (130) comprises a first operating element (170) and a second operating element (180), which are formed separately from one another in each case in one piece and are each mounted on the carrier element (102) so as to be pivotable about the operating axis (B).

2. Bicycle operating apparatus (100) according to Claim 1,
**characterized in that** the two operating elements (170, 180) are configured and mounted such that, starting from the neutral position of the operating component (130):
- direct deflection of the first operating element (170) in the second direction of rotation (R2) causes the second operating element (180) to be entrained in the second direction of rotation (R2),
- direct deflection of the second operating element (180) in the first direction of rotation (R1) causes the first operating element (170) to be entrained in the first direction of rotation (R1),
- upon direct deflection of the first operating element (170) in the first direction of rotation (R1), the second operating element (180) is not entrained in the first direction of rotation (R1), and
- upon direct deflection of the second operating element (180) in the second direction of rotation (R2), the first operating element (170) is not entrained in the second direction of rotation (R2) .

3. Bicycle operating apparatus (100) according to Claim 2,
**characterized in that** the two operating elements (170, 180) are also configured and mounted such that, starting from the neutral position of the operating component (130), the first operating element (170) is able to be deflected in the first direction of rotation (R1) and at the same time the second operating element (180) is able to be deflected in the second direction of rotation (R2) in order to actuate both the first switch (112) and the second switch (114).

4. Bicycle operating apparatus (100) according to Claim 2 or 3,
**characterized in that** the first operating element (170) and the second operating element (180) each have a contact surface (172, 182), wherein the contact surfaces (172, 182) of the first and the second operating element (170, 180) each extend substantially radially away from the operating axis (B) or parallel thereto and face one another in the fitted state of the bicycle operating apparatus (100) .

5. Bicycle operating apparatus (100) according to Claim 4,
**characterized in that** it has a compression spring, one end of which is supported on the contact surface (172) of the first operating element (170) and the other end of which is supported on the contact surface (182) of the second operating element (180).

6. Bicycle operating apparatus (100) according to Claim 4 or 5,
**characterized in that** the second operating element (180) comprises a plate-like wing portion (184), which extends substantially radially away from the operating axis (B) or parallel thereto, wherein the contact surface (182) of the second operating element (180) is formed on a first side of the plate-like wing portion (184) and a switch actuating surface (144) for actuating the second switch (114) is formed on a second side, opposite to the first side, of the plate-like wing portion (184).

7. Bicycle operating apparatus (100) according to Claim 6,
**characterized in that** the first operating element (170) comprises a first plate-like wing portion (174) and a second plate-like wing portion (176), which each extend substantially radially away from the operating axis (B) or parallel thereto, wherein the contact surface (172) of the first operating element (170) is formed on one side of the first wing portion (174) and a switch actuating surface (142) for actuating the first switch (112) is formed on a side of the second wing portion (176) that faces the contact surface (172) of the first operating element (170).

8. Bicycle operating apparatus (100) according to one of the preceding claims, **characterized in that**, in the neutral position of the operating component (130), surfaces of the first and the second operating element (170, 180) that are visible from the outside and adjoin one another transition steplessly into one another at least locally.

9. Bicycle operating apparatus (100) according to one of the preceding claims,
**characterized in that** the operating component (130; 230) comprises a first, a second and a third thumb engagement surface (131, 132, 195; 231, 232, 295), which are each designed to be actuated by a thumb of an operator in order to actuate one of the switches (112, 114; 212, 214), such that the first switch (112; 212) is actuatable by actuating the first thumb engagement surface (131; 231) and the second switch (114; 214) is actuatable by actuating the second thumb engagement surface (132; 232).

10. Bicycle operating apparatus (100; 200) according to Claim 9,
**characterized in that** the first and the second thumb engagement surface (131, 132; 231, 232) are arranged at an angle of less than 30° to one another.

11. Bicycle operating apparatus (100; 200) according to Claim 10,
**characterized in that** the first and the second thumb engagement surface (131, 132; 231, 232) are arranged in an offset manner relative to one another both along the operating axis (B) and in a direction perpendicular to the operating axis.

12. Bicycle operating apparatus (100; 200) according to one of Claims 9 to 11,
**characterized in that** the first and/or the second thumb engagement surface (131, 132; 231, 232), preferably both of them, is or are formed at least locally on a respective radially and/or axially protruding operating protrusion (191, 192; 291, 292) that is formed in a plate-like manner.

13. Bicycle operating apparatus (100) according to Claim 9, preferably in combination with at least one of the other preceding claims, **characterized in that** the first thumb engagement surface (131) is formed on the first operating element (170) and the second thumb engagement surface (132) is formed on the second operating element (180).

14. Bicycle operating apparatus (100; 200) according to one of Claims 9 to 13,
**characterized in that** the third thumb engagement surface (195; 295) adjoins the first thumb engagement surface (131; 231) or transitions into the latter, and is configured and arranged such that the second switch (114; 214) is actuatable by actuating the third thumb engagement surface (195; 295), wherein the first and the third thumb engagement surface (131, 195; 231, 295) jointly form preferably a recess-like structure (138; 238) for the operator's thumb.

## Revendications

1. Dispositif de commande de bicyclette (100) servant à la commande d'au moins un composant (32) d'une bicyclette (10), comportant :
- un élément de support (102), sur lequel un dispositif de fixation servant à la fixation du dispositif de commande de bicyclette (100) au guidon (20) d'une bicyclette (10) peut être attaché ou est prévu,
- un boîtier (108) prévu sur l'élément de support (102) et doté d'un ensemble de circuits (103) électronique reçu dans le boîtier (108), un premier et un deuxième commutateur (112, 114) connectés respectivement à l'ensemble de circuits (103) électronique étant prévu sur le boîtier (108),
- un composant de commande (130) monté sur l'élément de support (102) de manière à pouvoir pivoter autour d'un axe de commande (B) et précontraint dans une position neutre, lequel composant de commande peut être dévié à partir de la position neutre dans un premier sens de rotation (R1) autour de l'axe de commande (B), afin d'actionner le premier commutateur (112), et peut être dévié à partir de la position neutre dans un deuxième sens de rotation (R2) opposé au premier sens de rotation (R1), afin d'actionner le deuxième commutateur (114),
**caractérisé en ce que** le composant de commande (130) comporte un premier élément de commande (170) et un deuxième élément de commande (180) qui sont réalisés respectivement d'une seule pièce séparément l'un de l'autre et sont montés respectivement sur l'élément de support (102) de manière à pouvoir pivoter autour de l'axe de commande (B).

2. Dispositif de commande de bicyclette (100) selon la revendication 1,
**caractérisé en ce que** les deux éléments de commande (170, 180) sont réalisés et montés de telle sorte qu'à partir de la position neutre du composant de commande (130) :
- le deuxième élément de commande (180) est entraîné dans le deuxième sens de rotation (R2) par une déviation directe du premier élément de commande (170) dans le deuxième sens de rotation (R2),
- le premier élément de commande (170) est entraîné dans le premier sens de rotation (R1) par une déviation directe du deuxième élément de commande (180) dans le premier sens de rotation (R1),
- le deuxième élément de commande (180) n'est pas entraîné dans le premier sens de rotation (R1) en cas de déviation directe du premier élément de commande (170) dans le premier sens de rotation (R1), et
- le premier élément de commande (170) n'est pas entraîné dans le deuxième sens de rotation (R2) en cas de déviation directe du deuxième élément de commande (180) dans le deuxième sens de rotation (R2).

3. Dispositif de commande de bicyclette (100) selon la revendication 2,
**caractérisé en ce que** les deux éléments de commande (170, 180) sont réalisés et montés en outre de telle sorte qu'à partir de la position neutre du composant de commande (130), simultanément le premier élément de commande (170) peut être dévié dans le premier sens de rotation (R1) et le deuxième élément de commande (180) peut être dévié dans le deuxième sens de rotation (R2), afin d'actionner à la fois le premier commutateur (112) et le deuxième commutateur (114).

4. Dispositif de commande de bicyclette (100) selon la revendication 2 ou 3,
**caractérisé en ce que** le premier élément de commande (170) et le deuxième élément de commande (180) comprennent respectivement une surface de contact (172, 182), les surfaces de contact (172, 182) du premier et du deuxième élément de commande (170, 180) s'étendant respectivement sensiblement radialement à l'écart de l'axe de commande (B) ou parallèlement à celui-ci et étant tournées l'une vers l'autre dans l'état monté du dispositif de commande bicyclette (100).

5. Dispositif de commande de bicyclette (100) selon la revendication 4,
**caractérisé en ce qu'**il comprend un ressort de compression dont l'une des extrémités s'appuie contre la surface de contact (172) du premier élément de commande (170) et dont l'autre extrémité s'appuie contre la surface de contact (182) du deuxième élément de commande (180) .

6. Dispositif de commande de bicyclette (100) selon la revendication 4 ou 5,
**caractérisé en ce que** le deuxième élément de commande (180) comporte une partie aile (184) de type plaque, qui s'étend sensiblement radialement à l'écart de l'axe de commande (B) ou parallèlement à celui-ci, la surface de contact (182) du deuxième élément de commande (180) étant réalisée sur un premier côté de la partie aile (184) de type plaque et une surface d'actionnement de commutateur (144) servant à l'actionnement du deuxième commutateur (114) étant réalisée sur un deuxième côté, opposé au premier côté, de la partie aile (184) de type plaque.

7. Dispositif de commande de bicyclette (100) selon la revendication 6,
**caractérisé en ce que** le premier élément de commande (170) comporte une première partie aile (174) de type plaque et une deuxième partie aile (176) de type plaque, lesquelles s'étendent respectivement sensiblement radialement à l'écart de l'axe de commande (B) ou parallèlement à celui-ci, la surface de contact (172) du premier élément de commande (170) étant réalisée sur un côté de la première partie aile (174) et une surface d'actionnement de commutateur (142) servant à l'actionnement du premier commutateur (112) étant réalisée sur un côté, tourné vers la surface de contact (172) du premier élément de commande (170), de la deuxième partie aile (176).

8. Dispositif de commande de bicyclette (100) selon l'une des revendications précédentes,
**caractérisé en ce que**, dans la position neutre du composant de commande (130), des surfaces, adjacentes l'une à l'autre et visibles depuis l'extérieur, du premier et du deuxième élément de commande (170, 180) se prolongent de manière continue l'une dans l'autre au moins dans certaines parties.

9. Dispositif de commande de bicyclette (100) selon l'une des revendications précédentes,
**caractérisé en ce que** le composant de commande (130 ; 230) comporte une première, une deuxième et une troisième surface de contact avec le pouce (131, 132, 195 ; 231,232, 295), qui sont conçues respectivement pour l'actionnement par un pouce d'un opérateur pour l'actionnement de l'un des commutateurs (112, 114 ; 212, 214), de sorte que le premier commutateur (112 ; 212) peut être actionné par actionnement de la première surface de contact avec le pouce (131 ; 231) et que le deuxième actionneur (114 ; 214) peut être actionné par actionnement de la deuxième surface de contact avec le pouce (132 ; 232).

10. Dispositif de commande de bicyclette (100 ; 200) selon la revendication 9,
**caractérisé en ce que** la première et la deuxième surface de contact avec le pouce (131, 132 ; 231, 232) sont disposées l'une par rapport à l'autre suivant un angle inférieur à 30°.

11. Dispositif de commande de bicyclette (100 ; 200) selon la revendication 10,
**caractérisé en ce que** la première et la deuxième surface de contact avec le pouce (131, 132 ; 231, 232) sont disposées de manière décalée l'une par rapport à l'autre à la fois le long de l'axe de commande (B) et également dans une direction perpendiculaire à l'axe de commande.

12. Dispositif de commande de bicyclette (100 ; 200) selon l'une des revendications 9 à 11,
**caractérisé en ce que** la première et/ou la deuxième surface de contact avec le pouce (131, 132 ; 231,232), de préférence les deux, est/sont réalisée (s) au moins dans certaines parties sur une saillie de commande (191, 192 ; 291, 292) respective faisant saillie radialement et/ou axialement et réalisée en forme de plaque.

13. Dispositif de commande de bicyclette (100) selon la revendication 9, de préférence en association avec au moins l'une des autres revendications précédentes,
**caractérisé en ce que** la première surface de contact avec le pouce (131) est réalisée sur le premier élément de commande (170) et la deuxième surface de contact avec le pouce (132) est réalisée sur le deuxième élément de commande (180).

14. Dispositif de commande de bicyclette (100 ; 200) selon l'une des revendications 9 à 13,
**caractérisé en ce que** la troisième surface de contact avec le pouce (195 ; 295) est adjacente à la première surface de contact avec le pouce (131 ; 231) ou se prolonge dans celle-ci et est réalisée et disposée de telle sorte que le deuxième commutateur (114 ; 214) peut être actionné par actionnement de la troisième surface de contact avec le pouce (195 ; 295), la première et la troisième surface de contact avec le pouce (131, 195 ; 231, 295) formant ensemble de préférences une structure (138 ; 238) de type creux pour le pouce de l'opérateur.
